Europäisches Patentamt

European Patent Office

Office européen des brevets

(19)

(11) Numéro de publication : **0 516 536 A1**

## (12) DEMANDE DE BREVET EUROPEEN

(21) Numéro de dépôt : 92401447.5

(22) Date de dépôt : 26.05.92

(51) Int. Cl.$^5$ : **C08G 73/14,** C09D 179/08, H01B 3/30, C08J 3/11, // (C08J3/11, C08L79:08)

(30) Priorité : 30.05.91 FR 9106523

(43) Date de publication de la demande :
02.12.92 Bulletin 92/49

(84) Etats contractants désignés :
AT CH DE ES FR GB IT LI NL SE

(71) Demandeur : GEC ALSTHOM SA
38, avenue Kléber
F-75116 Paris (FR)

(72) Inventeur : **Foureys, Jean-Luc**
**4, rue François Gillet**
**F-69003 Lyon (FR)**
Inventeur : **Wagner, Richard**
**Lancin**
**F-38510 Courtenay (FR)**
Inventeur : **Anton, Alain**
**Rue de Beauregard**
**F-69360 Chaponnay (FR)**

(74) Mandataire : **Vigand, Privat et al**
**SOSPI 14-16, rue de la Baume**
**F-75008 Paris (FR)**

(54) **Procédé de fabrication d'un vernis d'émaillage à base de polyamide-imide à solvant polaire aprotique et vernis d'émaillage obtenu par ce procédé.**

(57) Procédé de fabrication d'un vernis d'émaillage à base de polyamide-imide, dans lequel on condense un diisocyanate aromatique ou une diamine correspondante avec un acide polycarboxylique aromatique à au moins trois fonctions carboxyles, ou un anhydride, ester ou halogénure d'acide correspondant, en solution dans un solvant polaire aprotique réactionnel au moins en partie autre que la N-méthyl-pyrrolidone, puis ajoute à la solution réactionnelle un solvant de dilution, caractérisé en ce que la teneur pondérale du solvant polaire aprotique réactionnel en N-méthyl-pyrrolidone est au plus égale à 30%, et en ce qu'après dilution la teneur pondérale en N-méthyl-pyrrolidone du solvant du vernis est ajustée entre 20% et 30%.

Vernis fabriqué selon ce procédé stable au stockage et présentant une viscosité réduite facilitant l'émaillage.

EP 0 516 536 A1

La présente invention concerne un procédé de fabrication d'un vernis d'émaillage à base de polyamide-imide, dans lequel on condense un diisocyanate aromatique ou une diamine correspondante avec un acide polycarboxylique aromatique à au moins trois fonctions carboxyles, ou un anhydride, ester ou halogénure d'acide correspondant, en solution dans un solvant polaire aprotique réactionnel au moins en partie autre que la N-méthyl-pyrrolidone, puis ajoute à la solution réactionnelle un solvant de dilution. Elle s'étend en outre à un vernis d'émaillage obtenu par ce procédé.

Les résines polyamide-imides sont obtenues par condensation d'un diisocyanate aromatique, tel que le 4-4′ diisocyanate de diphénylméthane, ou d'une diamine correspondante, avec un acide polycarboxylique aromatique à au moins trois fonctions carboxyles, ou un anhydride, un ester ou un halogénure d'acide correspondant, notamment l'anhydride trimellitique, de préférence en présence d'acide formique ou d'un alcool, dans un solvant polaire aprotique tel que la N-méthyl-pyrrolidone, le diméthylacétamide, le diméthylsulfoxyde, le diméthyl-formamide, le butyrolactone ou l'hexaméthylphosphorotriamide. Différentes variantes de ce procédé ont fait l'objet des documents FR-A-1422711, FR-A-1501198, GB-A-570858 et FR-A- 2516523.

Pour former un isolant de conducteur électrique, on prépare un vernis à partir du mélange réactionnel, en le diluant généralement à l'aide d'un diluant aromatique, tel que du xylène ou un dérivé aromatique de coupes pétrolières. On dépose ensuite le vernis sur le conducteur en plusieurs couches et assure sa cuisson par passage du fil enduit dans un four à des températures de 300°C à 550°C même ou plus. L'isolant est déposé soit sur le fil nu, soit plus souvent sur un fil muni d'une sous-couche en polyester ou polyesterimide.

Parmi les solvants polaires aprotiques utilisés actuellement, la N-méthyl-pyrrolidone a donné les meilleurs résultats en ce qui concerne les propriétés des polyamide-imides, car elle permet d'obtenir des polymères à plus longue chaîne et présentant plus de liaisons latérales entre chaînes (réticulation) que les autres. Elle paraît jouer un rôle catalytique dans la réaction de condensation.

L'emploi de la N-méthyl-pyrrolidone comme solvant du vernis, ou comme constituant principal de ce solvant, présente cependant certains inconvénients. Celle-ci constitue en effet un composé réactif et hygroscopique. Les vernis à base de N-méthyl-pyrrolidone présentent des viscosité élevées. Cette viscosité tend à augmenter au cours du stockage, rendant l'opération d'émaillage difficile. Le vernis est sensible à l'hydrolyse et risque de former un gel insoluble s'il est soumis à une température supérieure à 60°C. Du fait de sa température d'ébullition élevée, son élimination au four d'émaillage est difficile. En conséquence, la surface externe de l'émail présente parfois des irrégularités, ce qui réduit son aptitude au glissement et oblige à limiter la vitesse de bobinage du conducteur émaillé.

Dans le cas où l'émail est déposé au-dessus d'une sous-couche en polyester ou polyesterimide, la N-méthyl-pyrrolidone tend à migrer et à attaquer cette sous-couche, en entraînant une dégradation des caractéristiques de l'isolation.

La présente invention a pour but de procurer un vernis à base de polyamide-imide, permettant d'obtenir sur un conducteur électrique un émail isolant qui conserve les bonnes propriétés physiques, mécaniques, électriques et chimiques résultant d'un degré de condensation élevé et de nombreuses liaisons entre chaînes, mais qui soit plus stable au stockage et de viscosité réduite pour une même teneur en extrait sec, qui facilite les opérations d'émaillage au four, et procure une couche isolante qui n'ait pas d'effet nocif sur une sous-couche par migration de son solvant résiduaire.

Le procédé de fabrication d'un vernis selon l'invention est caractérisé en ce que la teneur pondérale du solvant polaire aprotique réactionnel en N-méthyl-pyrrolidone est au plus égale à 30%, et en ce qu'après dilution la teneur pondérale en N-méthyl-pyrrolidone du solvant du vernis est ajustée entre 20% et 30%.

Il répond en outre de préférence à au moins l'une des caractéristiques suivantes :
- Le solvant polaire aprotique réactionnel est un autre solvant que le N-méthyl-pyrrolidone, ou un mélange de tels solvants, et le solvant de dilution comprend de la N-méthyl-pyrrolidone.
- Le solvant polaire aprotique réactionnel est constitué par un mélange de N-méthyl-pyrrolidone et d'au moins un autre solvant polaire aprotique, de teneur pondérale en N-méthyl-pyrrolidone comprise entre 25% et 30%.
- L'autre solvant polaire aprotique est le diméthylacétamide.

Le vernis d'émaillage selon l'invention comporte un solvant de teneur en N-méthyl-pyrrolidone comprise entre 20% et 30% en poids, le complément étant constitué par au moins un autre solvant polaire aprotique, de préférence le diméthylacétamide, et par un diluant aromatique.

Il est décrit ci-après à titre d'exemples la fabrication de vernis selon les procédés connus et des variantes du procédé de l'invention.

Dans ce qui suivra la N-méthyl-pyrrolidone et le diméthylacétamide ont été désignées respectivement pour simplifier par les abréviations NMP ET DMAC.

Exemple 1 -

Synthèse de polyamide-imides dans la NMP comme solvant réactionnel. Fabrication du vernis, puis stockage de ce vernis et sa mise en oeuvre sur le conducteur ou une sous-couche (procédé connu).

On effectue la polycondensation à partir de polyacides aromatiques carboxyliques ou de leurs dérivés, et de diisocyanates ou des diamines correspondantes, dans un rapport molaire de 0,9 à 1,1 et de préférence sensiblement stoechimétrique, avec un léger excès de diisocyanates. On opère à une concentration pondérale de 20 % à 55 %, de préférence entre 35 % et 40 %, dans la NMP. On peut ajouter une quote-part de diluant aromatique, tel que le xylène, jusqu'à 30 % en poids. La viscosité intrinsèque dans la NMP à 20°C est comprise entre 0,4 et 0,6 dl/g. Le vernis formé a un aspect brun roque foncé limpide.

En fin de condensation, le mélange réactionnel est refroidi rapidement. On le dilue par un mélange de solvant NMP et de diluant aromatique, la proportion finale de diluant étant au maximum de 35 % en poids. L'extrait sec de la solution, mesuré sur 1g, 1 heure, en étuve ventilée, à 180°C est compris entre 25 % et 40 %. La solution reste limpide, de couleur brun rouge. Sa viscosité à 20°C est comprise entre 2000 et 4000 mPas.

Après filtration, le vernis est stocké généralement dans des fûts métalliques à température ambiante, celle-ci pouvant cependant varier de -10°C à +60°C selon le lieu et les conditions de stockage. Les récipients de stockage n'étant jamais parfaitement étanches, il se produit une reprise d'humidité, favorisée par la forte hygroscopicité de la NMP. Celle-ci peut conduire à la formation de pellicules blanchâtres en surface du vernis ou sur les parois du récipient. Ces pellicules repassent généralement en solution par agitation à la température ambiante. Par ailleurs, il se produit une augmentation importante de la viscosité, qui double sur une période de 4 semaines.

Cette augmentation nécessite un ajustement constant des conditions opératoires de revêtement du fil conducteur. En outre, si la température de stockage vient à dépasser +60°C ou si la quantité d'eau absorbée est trop importante, il peut se produire une gélification du vernis, qui devient alors inutilisable.

Lors de la mise en oeuvre du vernis sur le conducteur, son dépôt s'effectue par l'intermédiaire d'applicateurs utilisés habituellement dans le domaine de l'émaillage.

Une fois déposé sur le conducteur, le vernis subit une post-condensation dans un four à des températures pouvant atteindre 550°C ou plus, en plusieurs passages. La quasi-totalité du solvant et tous les diluants sont alors vaporisés, et une grande partie en est consommée dans le four.

Lors du vieillissement du fil isolé, son isolant se dégrade quelque peu, du fait de la réactivité chimique de la NMP résiduelle dans l'émail. Celle-ci se traduit par une activité catalytique importante vis-à-vis des fonctions isocyanates du polymère, entraînant de nouvelles liaisons interchaînes, et surtout par une agressivité vis-à-vis de certaines familles chimiques, telles que les polyesters et les polyesterimides. Or les polyamide-imides sont le plus souvent employés comme surcouches sur une première couche isolante formée par un polyester ou un polyesterimide. La NMP migre alors à l'intérieur de l'émail vers la sous-couche et altère les propriétés électriques, mécaniques et chimiques de l'émail, notamment au point de vue de l'endurance thermique. Cette altération se produit aussi avec les vernis d'imprégnation.

Par ailleurs, l'émail en polyamide-imide possède du fait de la présence de la NMP résiduaire, une énergie de surface élevée. Celle-ci entraîne une résistance notable au glissement, et oblige à n'effectuer le bobinage du conducteur isolé qu'à une vitesse modérée.

Exemple 2 -

Synthèse de polyamide-imides dans le diméthylacétamide (DMAC) comme solvant réactionnel. Fabrication du vernis, puis stockage et mise en oeuvre de celui-ci sur le conducteur ou une sous-couche (procédé également connu).

La polycondensation a lieu dans des conditions analogues à celles observées avec la NMP comme solvant, avec les mêmes réactifs dans les mêmes rapports molaires. Cependant le meilleur pouvoir solvant du DMAC permet d'augmenter la concentration lors de la réaction de condensation. A conditions opératoires identiques, la cinétique de la réaction se trouve ralentie, les temps de réaction pouvant même être doublés. On obtient une solution réactionnelle finale, avant dilution, qui présente une viscosité intrinsèque, mesurée à 20°C dans la NMP, de l'ordre de 0,2 dl/g.

La cinétique de la réaction se trouve encore ralentie si l'on ajoute au mélange réactionnel un diluant aromatique, tel que le xylène.

La dilution s'effectue par un mélange de solvant polaire aprotique autre que la NMP, par exemple le DMAC, et de diluant de façon que, la proportion finale de diluant ne dépasse pas 35 %. L'extrait sec de la solution, mesuré en étuve ventilée (1g, 1h, 180°C), est compris entre 25 % et 40 %. La solution reste limpide, de couleur orange foncé. Mais, pour un même extrait sec, la viscosité de la solution est deux fois moindre. Le vernis est également filtré, puis stocké.

Dans les mêmes conditions de stockage que lorsque le solvant est la NMP, l'augmentation de la viscosité avec le temps est plus faible (élévation de 50 % à 60 % en 4 semaines). La reprise d'humidité est peu importante, et il n'apparaît pratiquement pas de pellicule blanchâtre.

Il est encore nécessaire d'ajuster les conditions de l'opération d'émaillage en fonction de la viscosité du vernis, mais cela est moins systématique, et s'impose moins fréquemment que pour le vernis à solvant NMP. Le vernis gélifie cependant également s'il est stocké au-dessus de 60°C, et devient inutilisable.

Lors de la mise en oeuvre du vernis sur le conducteur, on obtient un isolant de propriétés sensiblement inférieures à celles de l'isolant obtenu à partir d'un vernis à la NMP, ce qui est attribuable à une moindre condensation du polymère en solution. Les températures du four d'émaillage peuvent être abaissées par rapport à celles d'un four alimenté en vernis à la NMP (ou la vitesse d'avance du conducteur peut être augmentée pour une même température).

Lors du vieillissement du fil isolé, on observe une agressivité moindre de l'émail vis-à-vis d'une sous-couche en polyester ou polyesterimide. Le point d'ébullition plus bas du DMAC entraîne une quantité résiduelle de DMAC dans l'émail moindre. Ceci conjugué avec sa moindre réactivité permet une meilleure tenue de l'isolant au vieillissemenent.

Exemple 3 -

Synthèse de polyamide-imide dans le DMAC. Dilution dans un solvant contenant de la NMP.

La synthèse dans le DMAC s'effectue comme dans l'exemple 2. On obtient une solution réactionnelle finale avant dilution qui présente une viscosité intrinsèque, mesurée à 20°C dans le NMP, de l'ordre de 0,2dl/g. On dilue la solution réactionnelle à l'aide d'un mélange de NMP et de diluant aromatique, tel que le xylène, de manière à obtenir une teneur pondérale de NMP dans le solvant du vernis de 25%, la proportion finale de diluant aromatique ne devant pas dépasser 35%. On obtient un vernis d'extrait sec et d'aspect voisins de celui à solvant formé par du diméthylacétamide pur, qui est filtré et stocké.

Ce vernis présente également une élévation de la viscosité dans le temps assez faible, avec peu de reprise d'humidité, et il apparaît peu de pellicules blanchâtres lors de son stockage. L'ajustement des conditions de l'opération d'émaillage en fonction de la viscosité du vernis s'impose également moins fréquemment qu'avec un vernis à la NMP.

Par contre, lors de la mise en oeuvre du vernis sur le conducteur ou sur une sous-couche, on obtient un émail isolant de propriétés voisines de celles d'un émail réalisé à partir d'un vernis à la NMP. Ceci paraît attribuable à une condensation ultérieure plus poussée de la polyamide-imide lors du passage du fil enduit au four, la NMP jouant un rôle catalytique vis-à-vis de la réaction de condensation.

Lors du vieillissement du fil isolé, on observe comme pour le vernis au DMAC une agressivité moindre vis-à-vis de l'émail d'une sous-couche ou d'un vernis d'imprégnation que celle d'un émail provenant d'un vernis à la NMP.

La baisse avec le temps des propriétés de l'émail est également moindre.

Exemple 4 -

Synthèse de polyamide-imide dans un mélange de DMAC et de NMP. Dilution sans addition de NMP ou avec addition d'une quantité réduite de NMP.

La synthèse dans un mélange de NMP et de DMAC, par exemple à 25% en poids de NMP, s'effectue comme dans l'exemple 3, mais la réaction est plus rapide,du fait de l'effet catalytique de la NMP. On obtient une solution réactionnelle finale avant dilution puis présente une viscosité intrinsèque, mesurée à 20°C dans le NMP, au moins égale à 0,4 dl/g. On assure la dilution par un solvant aromatique, tel que du xylène, de façon à obtenir un vernis dont le solvant contient environ 20% en poids de NMP. Les propriétés du vernis et de l'émail obtenu sur conducteur sont sensiblement égales à celles du vernis et de l'émail de l'exemple 3.

**Revendications**

1/ Procédé de fabrication d'un vernis d'émaillage à base de polyamide-imide, dans lequel on condense un diisocyanate aromatique ou une diamine correspondante avec un acide polycarboxylique aromatique à au moins trois fonctions carboxyles, ou un anhydride, ester ou halogénure d'acide correspondant, en solution dans un solvant polaire aprotique réactionnel au moins en partie autre que la N-méthyl-pyrrolidone, puis ajoute à la solution réactionnelle un solvant de dilution, caractérisé en ce que la teneur pondérale du solvant polaire aprotique réactionnel en N-méthyl-pyrrolidone est au plus égale à 30%, et en ce qu'après dilution la teneur pondérale en N-méthyl-pyrrolidone du solvant du vernis est ajustée entre 20% et 30%.

2/ Procédé selon la revendication 1, caractérisé en ce que le solvant polaire aprotique réactionnel est un autre solvant que le N-méthyl-pyrrolidone, ou un mélange de tels solvants, et en ce que le solvant de dilution comprend de la N-méthyl-pyrrolidone.

3/ Procédé selon la revendication 1, caractérisé en ce que le solvant polaire aprotique réactionnel est constitué par un mélange de N-méthyl-pyrrolidone et d'au moins un autre solvant polaire aprotique, de teneur pondérale en N-méthyl-pyrrolidone comprise entre 25% et 30%.

4/ Procédé selon l'une des revendications 1 à 3, caractérisé en ce que l'autre solvant polaire aprotique est le diméthylacétamide.

5/ Vernis d'émaillage obtenu par le procédé selon l'une des revendications 1 à 3, caractérisé en ce que son solvant est de teneur pondérale en N-méthyl-pyrrolidone comprise entre 20% et 30%, le complément étant constitué par au moins un autre solvant polaire aprotique et par un diluant aromatique.

6/ Vernis selon la revendication 5, caractérisé en ce que l'autre solvant polaire aprotique du vernis est le diméthylacétamide.

Office européen
des brevets

**RAPPORT DE RECHERCHE EUROPEENNE**

Numero de la demande

EP 92 40 1447

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | US-A-3 573 260 (E.F. MORELLO) --- | | C 08 G 73/14 |
| D,A | FR-A-2 516 523 (ESSEX GROUP) --- | | C 09 D 179/08 |
| | | | H 01 B 3/30 |
| D,A | FR-A-1 501 198 (MOBIL OIL) --- | | C 08 J 3/11 // |
| | | | (C 08 J 3/11 |
| D,A | FR-A-1 422 711 (BAYER) ----- | | C 08 L 79:08 ) |

**DOMAINES TECHNIQUES RECHERCHES (Int. Cl.5)**

C 08 G
C 09 D
H 01 B
C 08 J

Le présent rapport a été établi pour toutes les revendications

| Lieu de la recherche | Date d'achèvement de la recherche | Examinateur |
|---|---|---|
| LA HAYE | 21-07-1992 | LEROY ALAIN |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

.....................................................................

& : membre de la même famille, document correspondant

EPO FORM 1503 03.82 (P0402)